(19) Europäisches Patentamt

European Patent Office

Office européen des brevets

(11) **EP 4 744 747 A1**

(12) **EUROPEAN PATENT APPLICATION**
published in accordance with Art. 153(4) EPC

(43) Date of publication:
**20.05.2026 Bulletin 2026/21**

(21) Application number: **24895633.6**

(22) Date of filing: **01.07.2024**

(51) International Patent Classification (IPC):
***A63F 13/57*** *(2014.01)*

(52) Cooperative Patent Classification (CPC):
**A63F 13/42; A63F 13/52; A63F 13/57; A63F 13/837**

(86) International application number:
**PCT/CN2024/102956**

(87) International publication number:
**WO 2025/112530 (05.06.2025 Gazette 2025/23)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **28.11.2023 CN 202311608837**

(71) Applicant: **Tencent Technology (Shenzhen)
Company Limited
Shenzhen, Guangdong 518057 (CN)**

(72) Inventors:
• **WANG, Jiani
Shenzhen, Guangdong 518057 (CN)**
• **DU, Dandan
Shenzhen, Guangdong 518057 (CN)**

(74) Representative: **Eisenführ Speiser
Patentanwälte Rechtsanwälte PartGmbB
Gollierstraße 4
80339 München (DE)**

(54) **CONTROL METHOD AND APPARATUS, DEVICE, AND COMPUTER-READABLE STORAGE MEDIUM**

(57) The present application belongs to the technical field of computers. Disclosed are a control method and apparatus, a device, and a computer-readable storage medium. The method comprises: displaying a virtual environment picture, the virtual environment picture displaying a direction control, the direction control being used for controlling a virtual character to move in a virtual environment, the display mode of the direction control being a first display mode, and the first display mode being used for indicating that the moving mode of the virtual character in the virtual environment is a non-stealth mode (201); and, in response to a target gesture operation in respect of the direction control, displaying the direction control in an adjusted display mode of the direction control, an operation distance corresponding to the target gesture operation not being greater than a stealth range threshold, and the adjusted display mode of the direction control being used for indicating that the moving mode of the virtual character in the virtual environment is a stealth mode (202). This method allows users to determine moving modes of virtual characters in virtual environments with higher accuracy.

Display a virtual environment picture including a direction control, the direction control being configured to control movement of a virtual object in a virtual environment, the direction control being displayed in a first display mode, and the first display mode indicating that a moving mode of the virtual object in the virtual environment is a non-static step mode — 201

Display the direction control in an adjusted display mode of the direction control in response to a target gesture operation for the direction control, an operation distance corresponding to the target gesture operation being not greater than a static step range threshold, and the adjusted display mode of the direction control indicating that the moving mode of the virtual object in the virtual environment is a static step mode — 202

**FIG. 2**

**Description**

RELATED APPLICATION

This application claims priority to Chinese Patent Application No. 202311608837.X, entitled "GAME CONTROL METHOD AND APPARATUS, DEVICE, AND COMPUTER-READABLE STORAGE MEDIUM" filed on November 28, 2023, which is incorporated by reference in its entirety.

TECHNICAL FIELD

Embodiments of the invention relate to the field of computer technologies, and in particular, to a control method and apparatus, a device, and a computer-readable storage medium.

BACKGROUND

With the continuous development of computer technologies, there are increasing types of games running on terminal devices. A virtual object in a game may move in a virtual environment in a plurality of moving modes, and a static step mode is one of the moving modes.

SUMMARY

Embodiments of the invention provide a control method and apparatus, a device, and a computer-readable storage medium, so that accuracy of a determined moving mode of a virtual object in a virtual environment is high, and an effect of controlling the virtual object is good. The technical solutions are as follows.

According to an aspect, an embodiment of the invention provides a control method. The method includes the following operations.

A terminal device displays a virtual environment picture in which a direction control is displayed. The direction control is configured to control movement of a virtual object in a virtual environment, the direction control is displayed in a first display mode, and the first display mode indicates that a moving mode of the virtual object in the virtual environment is a non-static step mode.

The terminal device displays the direction control in an adjusted display mode of the direction control in response to a target gesture operation for the direction control. An operation distance corresponding to the target gesture operation is not greater than a static step range threshold, and the adjusted display mode of the direction control indicates that the moving mode of the virtual object in the virtual environment is a static step mode.

According to another aspect, an embodiment of the invention provides a control apparatus. The apparatus includes a display module.

The display module is configured to display a virtual environment picture in which a direction control is displayed. The direction control is configured to control movement of a virtual object in a virtual environment, the direction control is displayed in a first display mode, and the first display mode indicates that a moving mode of the virtual object in the virtual environment is a non-static step mode.

The display module is further configured to display the direction control in an adjusted display mode of the direction control in response to a target gesture operation for the direction control. An operation distance corresponding to the target gesture operation is not greater than a static step range threshold, and the adjusted display mode of the direction control indicates that the moving mode of the virtual object in the virtual environment is the static step mode.

According to another aspect, an embodiment of the invention provides a terminal device. The terminal device includes a processor and a memory, the memory storing at least one piece of program code, and the at least one piece of program code being loaded and executed by the processor, to cause the terminal device to implement any one of the foregoing control methods.

According to another aspect, a computer-readable storage medium is further provided. The computer-readable storage medium stores at least one piece of program code, the at least one piece of program code being loaded and executed by a processor, to cause a computer to implement any one of the foregoing control methods.

According to another aspect, a computer program or a computer program product is further provided. The computer program or the computer program product stores at least one computer instruction, the at least one computer instruction being loaded and executed by a processor, to cause a computer to implement any one of the foregoing control methods.

BRIEF DESCRIPTION OF THE DRAWINGS

To describe the technical solutions of embodiments of the invention more clearly, the following briefly introduces the accompanying drawings required for describing the embodiments. Apparently, the accompanying drawings in the following descriptions show only some of embodiments of the invention, and a person of ordinary skill in the art may further derive other drawings from these accompanying drawings without creative efforts.

FIG. 1 is a schematic diagram of an implementation environment of a control method according to an embodiment of the invention.

FIG. 2 is a flowchart of a control method according to an embodiment of the invention.

FIG. 3 is a schematic diagram of display of a virtual environment picture according to an embodiment of the invention.

FIG. 4 is a schematic diagram of display of another virtual environment picture according to an embodiment of the invention.

FIG. 5 is a schematic diagram of display of another virtual environment picture according to an embodiment of the invention.

FIG. 6 is a schematic diagram of display of another virtual environment picture according to an embodiment of the invention.

FIG. 7 is a schematic diagram of display of another virtual environment picture according to an embodiment of the invention.

FIG. 8 is a schematic diagram of display of another virtual environment picture according to an embodiment of the invention.

FIG. 9 is a schematic diagram of display of another virtual environment picture according to an embodiment of the invention.

FIG. 10 is a schematic diagram of display of another virtual environment picture according to an embodiment of the invention.

FIG. 11 is a flowchart of a control method according to an embodiment of the invention.

FIG. 12 is a flowchart of a control method according to an embodiment of the invention.

FIG. 13 is a schematic diagram of a structure of a control apparatus according to an embodiment of the invention.

FIG. 14 is a schematic diagram of a structure of a terminal device according to an embodiment of the invention.

FIG. 15 is a schematic diagram of a structure of a server according to an embodiment of the invention.

DETAILED DESCRIPTION

To make the objectives, technical solutions, and advantages of the invention clearer, the following further describes implementations of the invention in detail with reference to the accompanying drawings.

The terms "first", "second", and the like in the invention are intended to distinguish similar objects but not intended to necessarily indicate a specific order or sequence. Such used terms are interchangeable where appropriately, so that embodiments of the invention described herein can be implemented in an order other than those illustrated or described herein. The implementations described in the following exemplary embodiments do not indicate all implementations consistent with the invention. On the contrary, the implementations are merely examples of an apparatus and a method that are consistent with some aspects of the invention described in detail in the claims.

First, abbreviations and key terms mentioned in embodiments of the invention are defined.

A computer vision (CV) technology is a field of science that studies how to use a machine to "see", and furthermore, that uses a camera and a computer to replace human eyes to perform machine vision such as recognition and measurement on a target, and further perform graphic processing, so that the computer processes the target into an image more suitable for human eyes to observe, or an image transmitted to an instrument for detection. As a scientific discipline, computer vision studies related theories and technologies and attempts to establish an artificial intelligence system that can obtain information from images or multidimensional data. Large model technologies bring an important change to development of the computer vision technology. Pre-training models in vision fields such as a swin-transformer (a model for image classification and target detection), a vision transformer (ViT, a model for image classification), vision mixture of experts (V-MOE, a new visual architecture based on sparse mixture of experts), and masked autoencoders (MAE, a self-supervised learning method) may be quickly and widely applied to specific downstream tasks after fine tune. The computer vision technology generally includes technologies such as image processing, image recognition, image semantic understanding, image retrieval, optical character recognition (OCR), video processing, video semantic understanding, video content/behavior recognition, three-dimensional object reconstruction, a three dimension (3D) technology, virtual reality, augmented reality, synchronous positioning, and map construction, and further includes common biometric feature recognition technologies such as face recognition and fingerprint recognition.

A static step mode means that in a virtual environment, a virtual object moves slowly and makes no sound.

A fixed direction control refers to a type of direction control. A user interface (UI) of the direction control is fixed at a default location without moving, and does not change as a location of a hand changes. When the hand is located in a specific direction of the direction control, the virtual object walks toward the specific direction.

A follower direction control refers to another type of direction control. A location pressed by a finger is used as a center of the direction control. When the finger slides toward a specific direction, a virtual object walks toward the specific direction. However, a UI of the direction control is still displayed at a default location, and only a moving direction of the virtual object is displayed.

A virtual environment is an environment provided (displayed) when an application runs on a terminal device. The virtual environment is an environment created for a virtual object to conduct activities. The virtual environment may be a two-dimensional virtual environment, a 2.5-dimensional virtual environment, a three-dimensional virtual environment, or the like. The virtual environment may be a simulated environment of the real world, a semi-simulated environment of the real world, or a completely fictional environment. For example, the virtual environment mentioned in embodiments of the invention is the three-dimensional virtual environment.

A virtual object is a movable object in a virtual environment. The movable object may be a virtual person, a virtual animal, a cartoon character, or the like. A user may manipulate the virtual object through a peripheral component or by clicking/tapping a touch display screen. Each virtual object has a shape and size in the virtual environment, and occupies some space in the virtual environment. For example, when the virtual environment is a three-dimensional virtual environment, the virtual object is a three-dimensional model created based on a skeletal animation technology.

A third-person perspective is a perspective from which a camera may see, in a virtual environment and from a location at a specific distance behind a virtual object controlled by a user, the virtual object controlled by the user and all elements in a specific surrounding environment.

A first-person perspective means that a virtual environment is displayed from a subjective perspective of a user.

In a related technology, a game picture is displayed, the game picture includes a direction control, and the direction control is configured to control movement of a virtual object in a virtual environment. An operation distance corresponding to a target gesture operation is determined in response to the target gesture operation for the direction control. The virtual environment is controlled, when the operation distance is less than a static step range threshold, to generate a slight shake, so that a user determines that a moving mode of the virtual object in the virtual environment is a static step mode. The virtual environment is controlled, when the operation distance is not less than the static step range threshold, to generate a large shake, so that a user determines that a moving mode of the virtual object in the virtual environment is not a static step mode. However, the user can perceive the moving mode of the virtual object in the virtual environment only based on a shaking degree of the virtual environment, so that accuracy of the determined moving mode of the virtual object is low. In addition, for such games as precise aiming and short-time shooting, shaking of the virtual environment affects shooting precision of the user. Therefore, to ensure the shooting precision of the user, in such games, the virtual environment does not shake as the virtual object moves. Consequently, the user does not perceive the moving mode of the virtual object in the virtual environment. Because the user needs to control the virtual object based on the moving mode of the virtual object, an effect of controlling the virtual object by the user is poor.

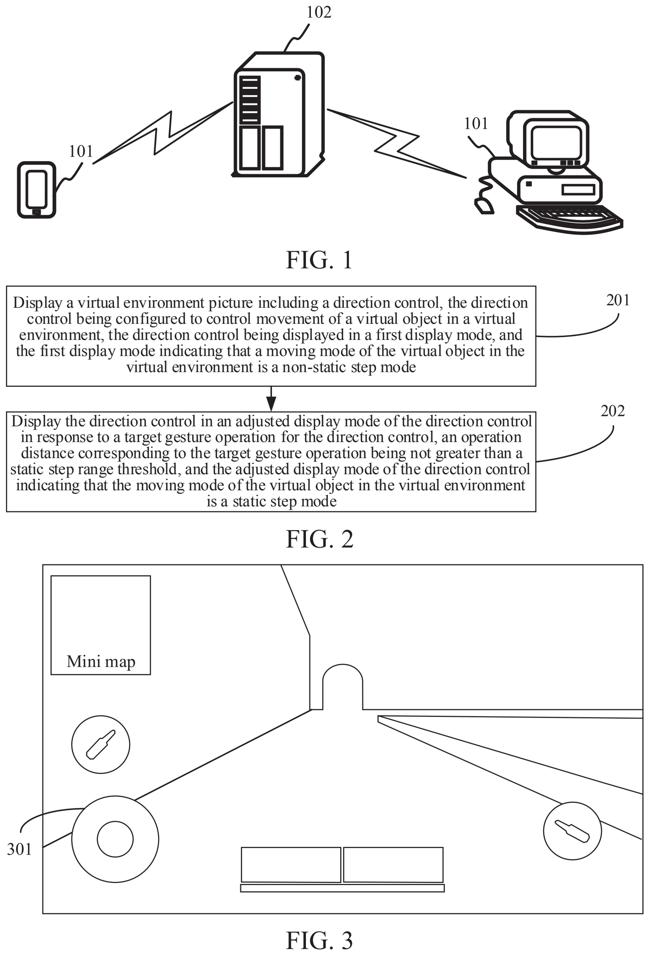

FIG. 1 is a schematic diagram of an implementation environment of a control method according to an embodiment of the invention. As shown in FIG. 1, the implementation environment includes a terminal device 101 and a server 102. A client that can provide a virtual environment is installed and run in the terminal device 101. The terminal device 101 is configured to perform the control method according to this embodiment of the invention. The client may be of multiple types. For example, a game client may provide the virtual environment for a user to play a game; a teaching client may provide the virtual environment for a user to learn online courses; a live stream client may provide the virtual environment for a user to perform an operation in the virtual environment while the user watching a live stream, and the like; or a chat client may provide the virtual environment for a user to present chat messages with a friend in the virtual environment, to create an effect of chatting with the friend in the virtual environment. A type of the client is not limited in this embodiment of the invention.

For example, the client that can provide the virtual environment may be a third-person shooting (TPS) game, a first-person shooting (FPS) game, a multiplayer online battle arena (MOBA) game, a multiplayer shooting survival game, a massive multiplayer online (MMO) role-playing game, an action role-playing game (ARPG), a virtual reality (VR) client, an augmented reality (AR) client, a three-dimensional map program, a map simulation program, a social client, an interactive entertainment client, and the like.

The server 102 is configured to provide a backend service for the client that can provide the virtual environment and that is installed in the terminal device 101. In a possible implementation, the server 102 takes on primary computing work while the terminal device 101 takes on secondary computing work. Alternatively, the server 102 takes on secondary computing work while the terminal device 101 takes on primary computing work. Alternatively, collaborative computing is performed between the server 102 and the terminal device 101 by using a distributed computing architecture.

In some embodiments, the terminal device 101 may be any electronic device product that may perform human-machine interaction with the user in one or more manners of a keyboard, a touch pad, a remote control, voice interaction, a handwriting device, or the like. For example, the terminal device 101 may be a smartphone, a tablet computer, a notebook computer, a desktop computer, a smart speaker, a smart watch, a personal computer (PC), a mobile phone, a personal digital assistant (PDA), a wearable device, a pocket personal computer (PPC), a smart on board unit, a smart television, or the like.

The terminal device 101 may generally refer to one of a plurality of terminal devices. In this embodiment, the terminal device 101 is merely used as an example for description. A person skilled in the art can learn that there may be more or fewer terminal devices 101. For example, there is only one terminal device 101, or there are dozens or hundreds of terminal devices 101, or more terminal devices 101. A quantity of terminal devices 101 and a device type are not limited in this embodiment of the invention.

The server 102 may be one server, a server cluster including a plurality of servers, or either of a cloud computing platform or a virtualization center. The embodiment of the invention is not limited thereto. The server 102 and the terminal device 101 are directly or indirectly communicatively connected in a wired or wireless communication manner. The server 102 has a data receiving function, a data processing function, and a data transmitting function. Certainly, the server 102 may also have another function. The embodiment of the invention is not limited thereto.

A person skilled in the art is to understand that the terminal device 101 and the server 102 are only examples for description, and other existing or future possible terminal devices or servers that are applicable to the invention are also to be included in the protection scope of the invention, and are included herein by reference.

An embodiment of the invention provides a control method. The method is applicable to the implementation environment in FIG. 1. A flowchart of the control method according to an embodiment of the invention shown in FIG. 2 is used as an example, and the method may be performed by the terminal device 101 in FIG. 1. As shown in FIG. 2, the method includes operation 201 and operation 202.

Operation 201: Display a virtual environment picture, where the virtual environment picture includes a direction control, the direction control is configured to control movement of a virtual object in a virtual environment, the direction control is displayed in a first display mode, and the first display mode indicates that a moving mode of the virtual object in the virtual environment is a non-static step mode.

In an exemplary embodiment of the invention, a client that can provide the virtual environment is installed and run in a terminal device. The client may be a client of any type. The embodiment of the invention is not limited thereto. The client may be a client that needs to be downloaded and installed, or may be an embedded program that relies on a host program to run, including but not limited to a mini program. A type of the client is not limited in this embodiment of the invention. When the client is the embedded program, where the embedded program is an application program that is developed and completed based on a programming language and that relies on the host program to run, the embedded program does not need to be downloaded and installed, and only needs to be dynamically loaded in the host program to run. A user may find an embedded program that is needed by the user in a manner of searching, scanning, or the like, and the embedded program may be run and used through clicking/tapping and opening. After the embedded program is closed after use, an internal memory of the terminal device is not occupied. This is very convenient. The client may be a client from a first-person perspective, or may be a client from a third-person perspective. To be specific, the client may display, from the first-person perspective, a virtual environment seen by the user, or may display, from a perspective of a camera, a virtual environment photographed by the camera. The camera is located at a location at a specific distance behind a virtual object controlled by the user. The client may be a client based on frame synchronization. In other words, the control method provided in this embodiment of the invention may be applied to the client based on the frame synchronization.

In a possible implementation, related information of the client is displayed in a display interface of the terminal device. The related information of the client may be an icon of the client, a name of the client, or other information of the client. The related information of the client is not limited in this embodiment of the invention.

When the user expects to run the client, the user selects the related information of the client, and the terminal device receives a trigger operation for the related information of the client, runs the client, and displays a front page of the client. A start control is displayed in a home page of the client. The start control is configured to start a game, start to learn an online course, watch a live stream, start a chat interface with a friend, and the like. The virtual environment picture is displayed in response to the trigger operation for the start control, the direction control is displayed in the virtual environment picture, and the direction control is configured to control movement of the virtual object in the virtual environment. In addition, the virtual environment is further displayed in the virtual environment picture, and the virtual object, a virtual item, or the like included in the virtual environment is further displayed in the virtual environment picture. Content displayed in the virtual environment picture is not limited in this embodiment of the invention. The display mode of the direction control is the first display mode. The first display mode indicates that the moving mode of the virtual object in the virtual environment is a non-static step mode. For example, the first display mode indicates that the virtual object does not move in the virtual environment, in other words, the first display mode indicates that the virtual object is in a static state in the virtual environment. Alternatively, the first display mode indicates that the moving mode of the virtual object in the virtual environment is a running mode.

In a possible implementation, different display modes of the direction control refer to different displayed colors of the direction control. In some embodiments, that the display mode of the direction control is the first display mode means that the direction control is displayed in gray. Certainly, the display mode of the direction control is the first display mode may alternatively mean that the direction control is displayed in another color. The embodiment of the invention is not limited thereto.

In another possible implementation, different display modes of the direction control refer to different shapes of the direction control. In some embodiments, that the display mode of the direction control is the first display mode means that the direction control is displayed in a square. Certainly, the display mode of the direction control is the first display mode may alternatively mean that the direction control is displayed in another shape. The embodiment of the invention is not limited thereto.

In another possible implementation, different display modes of the direction control refer to different patterns displayed in an area in which the direction control is located. In some embodiments, that the display mode of the direction control is the first display mode means that a non-static moving pattern, for example, a running pattern or another pattern, is displayed in the area in which the direction control is located. The embodiment of the invention is not limited thereto.

The foregoing plurality of possible implementations may alternatively be combined in any form. For example, the different display modes of the direction control refer to different combination manners including colors of the direction control and patterns displayed in the area in which the direction control is located.

That the user selects the related information of the client may be that the user clicks/taps the related information of the client, may be that the user double-clicks/double-taps the related information of the client, may be that the user selects the related information of the client in a voice manner, or may be that the user selects related information of the client in another manner. The embodiment of the invention is not limited thereto. A process of the trigger operation for the start control is similar to a process in which the user selects the related information of the client. Details are not described herein again in this embodiment of the invention.

FIG. 3 is a schematic diagram of display of a virtual environment picture according to an embodiment of the invention. A direction control 301 is displayed in the virtual environment picture shown in FIG. 3, and the direction control 301 is displayed in gray.

In some embodiments, a virtual object located in a virtual environment may be further displayed in the virtual environment picture, and the virtual object has a virtual item. A shoot control may be further displayed in the virtual environment picture, and the shoot control is configured to emit a virtual resource corresponding to the virtual item. For example, the virtual item is a virtual projectile, and a virtual resource corresponding to the virtual projectile is a virtual bullet. In response to a trigger operation for the shoot control, the virtual projectile is controlled to fire the virtual bullet.

Operation 202: Display the direction control in an adjusted display mode of the direction control in response to a target gesture operation for the direction control, where an operation distance corresponding to the target gesture operation is not greater than a static step range threshold, and the adjusted display mode of the direction control indicates that the moving mode of the virtual object in the virtual environment is a static step mode.

In a possible implementation, types of direction controls are different, target gesture operations for the direction controls are different, and manners of determining operation distances corresponding to the target gesture operations are also different. In the following two cases, the operation distances corresponding to the target gesture operations are determined based on different types of direction controls in response to the target gesture operations for the direction controls.

Case 1: A type of direction control is a fixed direction control, and the target gesture operation for the direction control is a trigger operation for the direction control. A distance between a location corresponding to the trigger operation and a center of the direction control is determined in response to the trigger operation for the direction control. The distance between the location corresponding to the trigger operation and the center of the direction control is determined as the operation distance.

The trigger operation for the direction control may be a click/tap operation for the direction control, may be a long-press operation for the direction control, or may be another operation for the direction control. The embodiment of the invention is not limited thereto.

In some embodiments, location information of the location corresponding to the trigger operation and location information of the center of the direction control need to be first determined before the distance between the location corresponding to the trigger operation and the center of the direction control is determined in response to the trigger operation for the direction control. A process of determining the location information of the location corresponding to the trigger operation includes: determining, as the location information of the location corresponding to the trigger operation in response to the trigger operation for the direction control, the location information that is of the location of the trigger operation and that is in the display interface of the terminal device.

A process of determining the location information of the center of the direction control includes: storing the location information of the center of the direction control in a server, and obtaining, in response to the trigger operation for the direction control, the location information of the center of the direction control through interaction with the server.

In some embodiments, a location information obtaining request is generated in response to the trigger operation for the direction control, and the location information obtaining request is configured for obtaining the location information of the center of the direction control. The location information obtaining request is transmitted to the server. The server receives the location information obtaining request, and transmits the location information of the center of the direction control to the terminal device, so that the terminal device obtains the location information of the center of the direction control.

The location information of the center of the direction control may be two-dimensional location information or three-dimensional location information. The location information of the location corresponding to the trigger operation may be two-dimensional location information or three-dimensional location information. The embodiment of the invention is not limited thereto. Dimensions of the location information of the center of the direction control and the location information of the location corresponding to the trigger operation are the same.

After the location information of the center of the direction control and the location information of the location corresponding to the trigger operation are obtained, the distance between the location corresponding to the trigger operation and the center of the direction control is determined based on the location information of the center of the direction control and the location information of the location corresponding to the trigger operation. In some embodiments, a Euclidean distance between the location information of the center of the direction control and the location information of the location corresponding to the trigger operation is determined as the distance between the location corresponding to the trigger operation and the center of the direction control.

For example, the location information of the center of the direction control is (X1, Y1, Z1), and the location information of the location corresponding to the trigger operation is (X2, Y2, Z2). In this case, it is determined that the distance between the location corresponding to the trigger operation and the center of the direction control is

$$\sqrt{(X1 - X2)^2 + (Y1 - Y2)^2 + (Z1 - Z2)^2}.$$

In a possible implementation, the distance between the location corresponding to the trigger operation and the center of the direction control may alternatively be determined in the following manner: The terminal device includes a distance determining module, and invokes, in response to the trigger operation for the direction control, the distance determining module, to determine the distance between the location corresponding to the trigger operation and the center of the direction control.

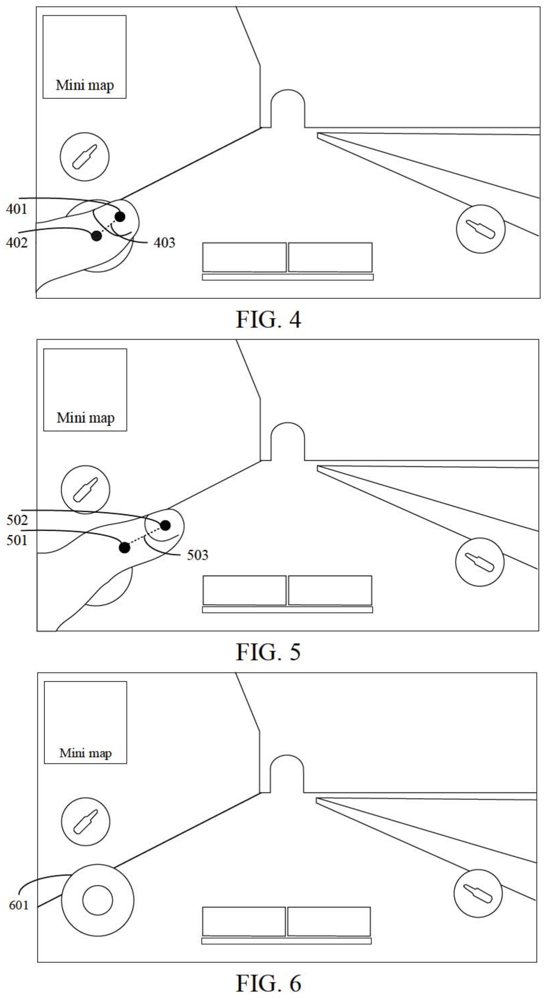

FIG. 4 is a schematic diagram of display of another virtual environment picture according to an embodiment of the invention. In the virtual environment picture shown in FIG. 4, 401 is a location corresponding to a trigger operation, 402 is a center of a direction control, and 403 is a distance between the location corresponding to the trigger operation and the center of the direction control.

In this case, a characteristic of a fixed direction control is fully considered, and a direction of a hand relative to the direction control is a moving direction of a virtual object. Therefore, the center of the direction control is used as a clear reference, and the distance between the location corresponding to the trigger operation and the center of the direction control is determined as an operation distance, so that the operation distance can accurately reflect a value of the moving distance of the virtual object. Therefore, accuracy of the operation distance is improved.

The distance between the location corresponding to the trigger operation and the center of the direction control may alternatively be determined in another manner. The embodiment of the invention is not limited thereto.

Case 2: A type of the direction control is a follower direction control, and a target gesture operation for the direction control is a continuous gesture operation that is with sliding after triggering and that is for the direction control, in other words, a sliding operation is performed when a finger is not raised after the direction control is triggered. A distance between the location corresponding to the trigger operation and a location of the sliding operation is determined in response to the continuous gesture operation that is with sliding after triggering and that is for a direction control. The distance between the location corresponding to the trigger operation and the location of the sliding operation is used as the operation distance.

The trigger operation for the direction control may be a click/tap operation for the direction control, may be a long-press operation for the direction control, or may be another operation for the direction control. The embodiment of the invention is not limited thereto.

In some embodiments, location information of the location corresponding to the trigger operation and location information of the location of the sliding operation need to be first obtained before the distance between the location corresponding to the trigger operation and the location of the sliding operation is determined in response to the continuous gesture operation that is with sliding after triggering and that is for the direction control. A process of obtaining location information of the location corresponding to the trigger operation and a process of obtaining location information of the location of the sliding operation are both similar to a process of obtaining the location information of the location corresponding to the trigger operation in Case 1. Details are not described herein again in this embodiment of the invention.

A process of determining the distance between the location corresponding to the trigger operation and the location of the sliding operation based on the location information of the location corresponding to the trigger operation and the location information of the sliding operation is similar to a process of determining the distance between the location corresponding to the trigger operation and the center of the direction control based on the location information of the location corresponding to the trigger operation and the location information of the center of the direction control in Case 1. Details are not described herein again in this embodiment of the invention.

In some embodiments, a distance determining module may be further invoked, in response to the continuous gesture operation that is with sliding after triggering and that is for the direction control, to determine the distance between the location corresponding to the trigger operation and the center of the direction control.

For example, FIG. 5 is a schematic diagram of display of another virtual environment picture according to an embodiment of the invention. In the virtual environment picture shown in FIG. 5, 501 is a location corresponding to a trigger operation, 502 is a current location of a sliding operation, and 503 is a distance between the location corresponding to the trigger operation and the location of the sliding operation.

In this case, a characteristic of a follower direction control is fully considered, a location pressed by a finger is used as a center, and a sliding direction of the finger is a moving direction of a virtual object. Therefore, the location corresponding to the trigger operation is used as a clear reference, and the distance between the location corresponding to the trigger operation and the location of the sliding operation is determined as an operation distance, so that the operation distance can accurately reflect a value of the moving distance of the virtual object. Therefore, accuracy of the operation distance is improved.

In some embodiments, an adjusted display mode of the direction control is determined based on the operation distance. In other words, different operation distances indicate different adjusted display modes of the direction control. In this way, a user can learn of a range of a current operation distance by viewing a display mode of the direction control.

The adjusted display mode of the direction control is determined based on the operation distance when the operation distance is not greater than a static step range threshold. The direction control is displayed in the adjusted display mode of the direction control. The adjusted display mode of the direction control indicates that a moving mode of the virtual object in a virtual environment is a static step mode.

The static step range threshold is set based on experience or adjusted based on an implementation environment. The embodiment of the invention is not limited thereto. For example, the static step range threshold is 30 pixels (px).

In a possible implementation, in a case that the operation distance is not greater than a distance threshold, the adjusted display mode of the direction control is a second display mode, the distance threshold is less than the static step range threshold, and the second display mode indicates that the moving mode of the virtual object in the virtual environment is the static step mode. In a case that the operation distance is greater than a distance threshold and is less than the static step range threshold, the adjusted display mode of the direction control is a fourth display mode, and the fourth display mode is a display mode that transitions between the second display mode and a third display mode, to be specific, the fourth display mode is a display mode presented in a process of changing from the second display mode to the third display mode. In a case that the operation distance is equal to the static step range threshold, the adjusted display mode of the direction control is the third display mode, and the third display mode indicates that the moving mode of the virtual object in the virtual environment is the static step mode but is about to change.

In a possible implementation, after the operation distance is determined in the foregoing process, a process in which the adjusted display mode of the direction control is determined based on the operation distance when the operation distance is not greater than the static step range threshold includes the following three cases.

Case 1: The second display mode is determined as the adjusted display mode of the direction control when the operation distance is not greater than the distance threshold.

The distance threshold is less than the static step range threshold. The distance threshold is set based on experience or adjusted based on an implementation environment. The embodiment of the invention is not limited thereto. For example, the distance threshold is 12 pixels. The second display mode indicates that the moving mode of the virtual object in the virtual environment is still the static step mode.

The second display mode is any display mode different from the first display mode. For example, that the display mode of the direction control is the second display mode means that the direction control is displayed in yellow. For example, FIG. 6 is a schematic diagram of display of another virtual environment picture according to an embodiment of the invention. A direction control 601 is displayed in the virtual environment picture shown in FIG. 6, and the direction control 601 is displayed in yellow (not shown in FIG. 6).

For example, a distance threshold is 12 pixels, and the operation distance determined in the foregoing process is 10 pixels. In this case, a display mode of the direction control is adjusted from a first display mode to a second display mode, in other words, the direction control is adjusted from gray to yellow.

In the foregoing example, an example in which different display modes of the direction control refer to different displayed colors of the direction control is used. In another embodiment, different display modes of the direction control refer to different shapes of the direction control. In this case, that the display mode of the direction control is adjusted from the first display mode to the second display mode means that the direction control is adjusted from a shape in the first display mode to a shape in the second display mode. Alternatively, in another embodiment, different display modes of the direction control refer to different patterns displayed in an area in which the direction control is located. In this case, that the display mode of the direction control is adjusted from the first display mode to the second display mode means that the pattern displayed in the area in which the direction control is located is adjusted from a pattern in the first display mode to a pattern in the second display mode. Alternatively, different display modes of the direction control refer to different combination manners including colors of the direction control and patterns displayed in an area in which the direction control is located. In this case, that the display mode of the direction control is adjusted from the first display mode to the second display mode means that the color of the direction control is adjusted from a color in the first display mode to a color in the second display mode, and the pattern displayed in the area in which the direction control is located is adjusted from a pattern in the first display mode to a pattern in the second display mode. A specific method for adjusting the display mode of the direction control from the first display mode to the second display mode is not limited in this embodiment of the invention.

Case 2: A third display mode is determined as an adjusted display mode of the direction control when the operation distance is equal to a static step range threshold.

The third display mode indicates that a moving mode of a virtual object in a virtual environment is a static step mode but is about to change. The direction control is displayed in the third display mode, so that a user can be prompted that a current operation distance has reached the static step range threshold. If the operation distance increases further, the static step mode will be exited. The third display mode is a display mode different from both the first display mode and the second display mode. For example, that the display mode of the direction control is the third display mode means that the direction control is displayed in red.

For example, the static step range threshold is 30 pixels, and the operation distance determined in the foregoing process is 30 pixels. In this case, the display mode of the direction control is adjusted from the first display mode to the third display mode, in other words, the direction control is adjusted from gray to red.

In the foregoing example, an example in which different display modes of the direction control refer to different displayed colors of the direction control is used. In another embodiment, different display modes of the direction control refer to different shapes of the direction control. In this case, that the display mode of the direction control is adjusted to the third display mode means that the direction control is adjusted to a shape in the third display mode. Alternatively, in another embodiment, different display modes of the direction control refer to different patterns displayed in an area in which the direction control is located. In this case, that the display mode of the direction control is adjusted to the third display mode means that the pattern displayed in the area in which the direction control is located is adjusted to a pattern in the third display mode. Alternatively, different display modes of the direction control refer to different combination manners including colors of the direction control and patterns displayed in an area in which the direction control is located. In this case, that the display mode of the direction control is adjusted to the third display mode means that the color of the direction control is adjusted to a color in the third display mode, and the pattern displayed in the area in which the direction control is located is adjusted to a pattern in the third display mode. A specific method for adjusting the display mode of the direction control to the third display mode is not limited in this embodiment of the invention.

Case 3: A fourth display mode is determined as an adjusted display mode of the direction control when the operation distance is greater than the distance threshold and less than a static step range threshold.

The fourth display mode is a display mode different from all the first display mode, the second display mode, and the third display mode. The fourth display mode corresponds to the operation distance. To be specific, when operation distances are different, fourth display modes are also different. Therefore, in a case that a target gesture operation is continuously performed, and the operation distance changes, the determined fourth display mode also changes, so that the fourth display mode of the direction control can dynamically change as the operation distance changes. An effect that the direction control dynamically changes as the operation distance changes is presented. If the operation distance is closer to the static step range threshold, the fourth display mode is closer to the third display mode. To be specific, a difference between the static step range threshold and the operation distance is negatively correlated to a degree of similarity between the fourth display mode and the third display mode. If the operation distance is closer to the distance threshold, the fourth display mode is closer to the second display mode. To be specific, a difference between the operation distance and the distance threshold is negatively correlated to a degree of similarity between the fourth display mode and the second display mode.

In some embodiments, a display mode corresponding to the operation distance is determined as the fourth display mode when the operation distance is greater than the distance threshold and is less than the static step range threshold. A terminal device stores a correspondence between each distance that is greater than the distance threshold and is less than the static step range threshold, and each display mode. For example, the following Table 1 is an exemplary table of the correspondence between each distance that is greater than a distance threshold and is less than a static step range threshold, and each display mode according to this embodiment of the invention.

Table 1

| Distance | Display mode |
| --- | --- |
| 13 | Color 1 |
| 14 | Color 2 |
| 15 | Color 3 |
| 16 | Color 4 |
| ... | ... |
| 29 | Color N |

It follows from Table 1 that, when the distance is 13, a corresponding display mode is Color 1, and when the distance is another value, a corresponding display mode is shown in Table 1. Details are not described herein one by one again. For example, if the operation distance determined in operation 202 is 14, Color 2 is determined as the fourth display mode based on the correspondences shown in Table 1, in other words, the direction control is adjusted from gray to Color 2.

The foregoing three cases are combined. The target gesture operation whose operation distance gradually increases is used as an example. Initially, the operation distance of the target gesture operation is not greater than the distance threshold, the direction control is displayed in the second display mode, and then the operation distance gradually increases. In a case that the operation distance becomes greater than the distance threshold and is less than the static step range threshold, the direction control is displayed in the fourth display mode, and the fourth display mode is close to the second display mode at the beginning. Then, as the operation distance gradually increases, the fourth display mode becomes less similar to the second display mode, and is increasingly close to the third display mode. The direction control is displayed in the third display mode until the operation distance is equal to the static step range threshold. Therefore, in an entire procedure, this yields a gradual transition from the second display mode to the fourth display mode. In addition, the transition is natural, and a display effect is good.

In some embodiments, the direction control changes to yellow when the operation distance is not greater than the distance threshold. The direction control changes to red when the operation distance is equal to the static step range threshold. The direction control changes to a color corresponding to the operation distance when the operation distance is greater than the distance threshold and is less than the static step range threshold. The color corresponding to the operation distance is a gradient color from yellow to red. In addition, if the operation distance is closer to the static step range threshold, the color corresponding to the operation distance is closer to red. Conversely, if the operation distance is closer to the distance threshold, the color corresponding to the operation distance is closer to yellow.

In a possible implementation, the second display mode is a first color, the third display mode is a second color, and the fourth display mode is a gradient color between the first color and the second color. In a case that the operation distance is greater than the distance threshold and is less than the static step range threshold, if the operation distance is closer to the distance threshold, the color corresponding to the operation distance is closer to the first color; or if the operation distance is closer to the static step range threshold, the color corresponding to the operation distance is closer to the second color.

In another possible implementation, the second display mode is a first shape, the third display mode is a second shape, and the fourth display mode is a gradient shape between the first shape and the second shape. In a case that the operation distance is greater than the distance threshold and is less than the static step range threshold, if the operation distance is closer to the distance threshold, a shape corresponding to the operation distance is closer to the first shape; or if the operation distance is closer to the static step range threshold, a shape corresponding to the operation distance is closer to the second shape.

In another possible implementation, the second display mode displays a first pattern in the area in which the direction control is located, the third display mode displays a second pattern in the area in which the direction control is located, and the fourth display mode displays a gradient pattern between the first pattern and the second pattern in the area in which the direction control is located. In a case that the operation distance is greater than the distance threshold and is less than the static step range threshold, if the operation distance is closer to the distance threshold, a pattern corresponding to the operation distance is closer to the first pattern; or if the operation distance is closer to the static step range threshold, a pattern corresponding to the operation distance is closer to the second pattern.

The foregoing three possible implementations may be combined in any form, to form another possible implementation of this embodiment of the invention. A combination manner is not limited in this embodiment of the invention.

In a possible implementation, a static step indicator may be further displayed in the virtual environment picture in response to the target gesture operation for the direction control. The static step indicator indicates that the moving mode of the virtual object in the virtual environment is the static step mode. An operation distance corresponding to the target gesture operation is not greater than the static step range threshold.

In a case that the operation distance is not greater than the static step range threshold, the display mode of the direction control is adjusted, and the static step indicator is displayed in the virtual environment picture. This is because some users have large fingers. When the user triggers the direction control, the direction control may be completely covered. In this case, if the display mode of the direction control is adjusted only, because the finger of the user completely covers the direction control, the user cannot perceive a change of the display mode of the direction control, and consequently, cannot perceive the moving mode of the virtual object in the virtual environment. Therefore, a static step indicator is added and displayed in the virtual environment picture in addition to that the display mode of the direction control is adjusted, so that the user can perceive the moving mode of the virtual object in the virtual environment through the static step indicator in a case that the finger of the user completely covers the direction control.

In some embodiments, the static step indicator is displayed in the virtual environment picture with the same display mode as the adjusted display mode of the direction control. For example, the adjusted display mode of the direction control is that the direction control is displayed in yellow. In this case, the static step indicator is displayed in yellow. For another example, the adjusted display mode of the direction control is that the direction control is displayed in red. In this case, the static step indicator is displayed in red. In this way, it can be ensured that display effects of the static step indicator and the direction control are harmonious and uniform, improving an overall display effect of an interface, and helping the user quickly determine a current moving mode based on uniform display modes of the static step indicator and the direction control, to avoid confusion caused by non-uniform display modes of the static step indicator and the direction control, and avoid interference to a process in which the user controls the virtual object.

In a possible implementation, when the operation distance is not greater than the static step range threshold, a display location of the static step indicator needs to be first determined before the static step indicator is displayed in the virtual environment picture. A process of determining the display location of the static step indicator is not limited in this embodiment of the invention.

In some embodiments, the display location of the static step indicator is determined in the following process. The process includes: determining the display location of the static step indicator based on the target gesture operation for the direction control when the operation distance is not greater than the static step range threshold; and displaying the static step indicator at the display location of the static step indicator in the virtual environment picture, to ensure that the display location of the static step indicator is related to the target gesture operation. This considers that a visual focus of the user is generally near the target gesture operation in a process in which the user performs the target gesture operation. In this case, the display location of the static step indicator is determined based on the target gesture operation, so that it can be ensured that the display location of the static step indicator does not depart from a visual angle range of the user, to help the user see the static step indicator, and ensure effective display of the static step indicator.

If target gesture operations for the direction control are different, the methods for determining the display location of the static step indicator are also different. The display location of the static step indicator may be determined based on the target gesture operations for the direction control in the following two cases.

In a first case, a type of the direction control is a fixed direction control, and the target gesture operation is a trigger operation, to be specific, the target gesture operation for the direction control is the trigger operation for the direction control. The display location of the static step indicator is determined based on the trigger operation for the direction control.

In some embodiments, a first ray that uses a center of the direction control as a starting point and passes through a location corresponding to the trigger operation is determined based on the trigger operation for the direction control. A first point on the first ray is determined as the display location of the static step indicator, a distance between the first point and a second point meets a distance requirement, the first point is positioned at a different location than the direction control, and the second point is an intersection point of the first ray and the direction control.

That the distance between the first point and the second point meets the distance requirement means that the distance between the first point and the second point is a target distance. The target distance is set based on experience or adjusted based on an implementation environment. The embodiment of the invention is not limited thereto. For example, the target distance is three pixels.

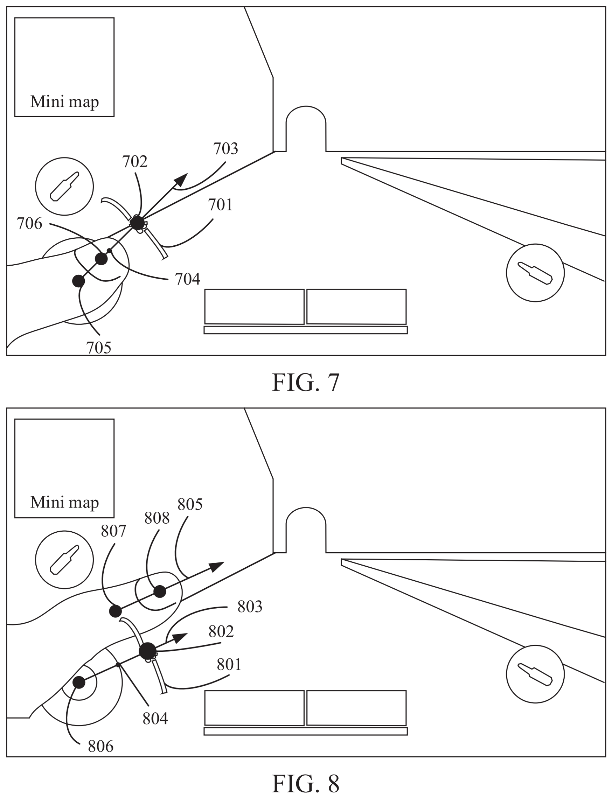

For example, FIG. 7 is a schematic diagram of display of another virtual environment picture according to an embodiment of the invention. A static step indicator 701 is displayed in the virtual environment picture shown in FIG. 7, and a display location of the static step indicator 701 is a location at which a first point 702 is located. The first point 702 is located on a first ray 703, and a distance between the first point 702 and a second point 704 meets a distance requirement. The first ray 703 is a ray that uses a center 705 of a direction control as a starting point and passes through a location 706 corresponding to a trigger operation.

In this case, considering that a visual focus of a user is near a trigger location when the user performs the trigger operation through a finger, the static step indicator is displayed in an extending direction from the center of the direction control to the trigger location corresponding to the trigger operation, which may be considered that the static step indicator is displayed in a direction to which the finger of the user points. In addition, the distance between the first point and the second point meets the distance requirement, so that the finger of the user does not cover the static step indicator because the finger is excessively small, or the user cannot quickly see the static step indicator because the finger is excessively large. Therefore, it is ensured that a display location of the static step indicator does not depart from a visual angle range of the user, to help the user quickly see the static step indicator, and ensure effective display of the static step indicator.

In a second case, a type of the direction control is a follower direction control, and the target gesture operation is a continuous gesture operation with sliding after triggering, to be specific, the target gesture operation for the direction control is the continuous gesture operation that is with sliding after triggering and that is for the direction control, and includes the trigger operation and a sliding operation. In this case, the display location of the static step indicator is determined based on the continuous gesture operation that is with sliding after triggering and that is for the direction control.

In some embodiments, a second ray that uses the location corresponding to the trigger operation as a starting point and passes through a location of the sliding operation is determined based on the continuous gesture operation that is with sliding after triggering and that is for the direction control. A third ray that is parallel to the second ray and uses the center of the direction control as a starting point is determined. A third point on the third ray is determined as the display location of the static step indicator, a distance between the third point and a fourth point meets a distance requirement, the third point is positioned at a different location than the direction control, and the fourth point is an intersection point of the third ray and the direction control.

For example, FIG. 8 is a schematic diagram of display of another virtual environment picture according to an embodiment of the invention. A static step indicator 801 is displayed in the virtual environment picture shown in FIG. 8, and a display location of the static step indicator 801 is a location at which a third point 802 is located. The third point 802 is located on a third ray 803, and a distance between the third point 802 and a fourth point 804 meets a distance requirement. A third ray 803 is a ray that is parallel to a second ray 805 and uses a center 806 of a direction control as a starting point. The second ray 805 is a ray that uses a location 807 corresponding to a trigger operation as a starting point and passes through a location 808 of a sliding operation.

In this case, the static step indicator is displayed in a direction that uses the center of the direction control as the starting point and is parallel to a direction from a trigger location to the location of the sliding operation. A user can learn whether an angle of a sliding direction is suitable by using the direction control as a reference. In addition, considering that a visual focus of the user is near a sliding location when the user performs the trigger operation and the sliding operation through a finger, the static step indicator is displayed near the sliding location, to ensure that a display location of the static step indicator does not depart from a visual angle range of the user, help the user quickly see the static step indicator, and ensure effective display of the static step indicator.

In a possible implementation, after the direction control is displayed in an adjusted display mode of the direction control, if the user further performs an operation on the direction control, a display mode of the direction control may be further adjusted. The process includes: when a type of the direction control is a fixed direction control, and a target gesture operation for the direction control is the trigger operation for the direction control, determining, in response to receiving, after the trigger operation, the sliding operation for the direction control, a distance between the location of the sliding operation and the center of the direction control; and displaying the direction control in a first display mode when the distance between the location of the sliding operation and the center of the direction control is greater than a static step range threshold. In this manner, the user can learn that a moving mode of a virtual object in a virtual environment is a non-static step mode. For example, the direction control is displayed in gray.

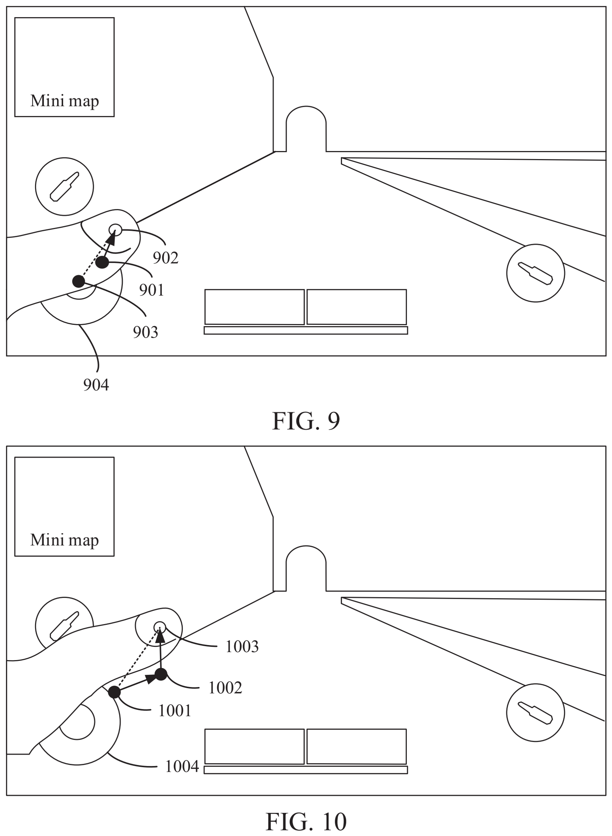

For example, FIG. 9 is a schematic diagram of display of another virtual environment picture according to an embodiment of the invention. In the virtual environment picture shown in FIG. 9, a location corresponding to a trigger operation for a direction control is 901. After the trigger operation for the direction control, the direction control is further slid. A location of a sliding operation is 902. A distance between the location of the sliding operation and a center 903 of the direction control is greater than a static step range threshold. Therefore, the direction control 904 in FIG. 9 is displayed in gray (a first display mode).

In a case that a user performs the sliding operation after triggering a fixed direction control, the user can quickly determine, by detecting whether the distance between the location of the sliding operation and the center of the direction control is greater than the static step range threshold, whether a static step mode is to be exited, so that the direction control is displayed in the first display mode after the static step mode is exited, to ensure that a display mode of the direction control matches a moving mode of a virtual object, and improve accuracy of the display mode.

In some embodiments, displaying a static step indicator is canceled when the distance between the location of the sliding operation and the center of the direction control is greater than the static step range threshold.

In addition, a type of the direction control is a follower direction control, and a target gesture operation for the direction control is a continuous gesture operation that is with sliding after triggering and that is for the direction control, to be specific, the continuous gesture operation includes the trigger operation and the sliding operation. In response to receiving, after the sliding operation, a secondary sliding operation for the direction control, a distance between a location of the secondary sliding operation and the location corresponding to the trigger operation is determined. The direction control is displayed in the first display mode when the distance between the location of the secondary sliding operation and the location corresponding to the trigger operation is greater than the static step range threshold. For example, the direction control is displayed in gray.

In some embodiments, displaying the static step indicator is canceled when the distance between the location of the secondary sliding operation and the location corresponding to the trigger operation is greater than the static step range threshold.

For example, FIG. 10 is a schematic diagram of display of another virtual environment picture according to an embodiment of the invention. In the virtual environment picture shown in FIG. 10, a location corresponding to a trigger operation for a direction control is 1001. After the trigger operation for the direction control, a location of a sliding operation for sliding the direction control initially is 1002, and a location of a secondary sliding operation for sliding the direction control secondarily is 1003. A distance between the location 1003 of the secondary sliding operation and the location 1001 of the trigger operation is greater than a static step range threshold. Therefore, the direction control 1004 in FIG. 10 is displayed in gray (a first display mode).

In a case that a user performs the sliding operation after triggering a follower direction control, if performing a secondary sliding operation for the follower direction control, the user can quickly determine, by detecting whether a distance between a location of the secondary sliding operation and the location of the trigger operation is greater than the static step range threshold, whether a static step mode is to be exited, so that the direction control is displayed in the first display mode after the static step mode is exited, to ensure that a display mode of the direction control matches a moving mode of a virtual object, and improve accuracy of the display mode.

In the foregoing method, in a case that the direction control is triggered, and an operation distance corresponding to a target gesture operation of the direction control is not greater than the static step range threshold, an adjusted display mode of the direction control is determined, and the direction control is displayed in the adjusted display mode of the direction control. In the method, the user can learn, based on the adjusted display mode of the direction control, whether the moving mode of the virtual object in a virtual environment is the static step mode, without shaking the virtual environment, so that accuracy of the moving mode that is of the virtual object and that is determined by the user in the virtual environment is high. The user may control the virtual object based on the moving mode of the virtual object in the virtual environment, so that an effect of controlling the virtual object is good.

In addition, the adjusted display mode of the direction control is determined based on the operation distance. In this case, the direction control is displayed in the adjusted display mode of the direction control, so that the user can learn, based on the adjusted display mode of the direction control, whether the moving mode of the virtual object in the virtual environment is the static step mode, and a range of an operation distance of the target gesture operation. There is a rough understanding of a change of the operation distance, and an amount of displayed information increases. The user may determine a next operation based on the current operation distance of the target gesture operation, to control the virtual object and improve the effect of controlling the virtual object.

In addition, different ranges of the operation distance respectively correspond to a second display mode, a fourth display mode, and a third display mode. The second display mode indicates that the moving mode of the virtual object in the virtual environment is the static step mode. The third display mode indicates that the moving mode of the virtual object in the virtual environment is the static step mode but is about to change. The fourth display mode is a display mode that transitions between the second display mode and the third display mode. This achieves a progressive effect of the three display modes, so that the user can clearly understand the range of the operation distance based on the display mode of the direction control. In addition, in a case that the operation distance changes, transition among the second display mode, the fourth display mode, and the third display mode can be naturally performed, thereby improving a display effect.

In addition, for the fourth display mode, a fixed display mode is not directly used, but the fourth display mode corresponds to the operation distance. When operation distances are different, fourth display modes are also different. The operation distance is closer to a distance threshold, the fourth display mode is closer to the second display mode. The operation distance is closer to the static step range threshold, the fourth display mode is closer to the third display mode. Therefore, in a case that the operation distance of the target gesture operation changes, the fourth display mode of the direction control can dynamically change as the operation distance changes. An effect of the direction control dynamically changing as the operation distance changes is presented, and a method for dynamically displaying the direction control is provided, thereby improving the display effect.

In addition, embodiments of the invention provide a plurality of methods for classifying different display modes. For example, different display modes of the direction control refer to different colors or different shapes of the direction control, or different patterns displayed in an area in which the direction control is located. In this case, for any method for classifying the different display modes, the methods in embodiments of the invention can be used for adaptively adjusting the display mode of the direction control, so that the direction control is displayed based on an adjusted display mode, thereby improving flexibility.

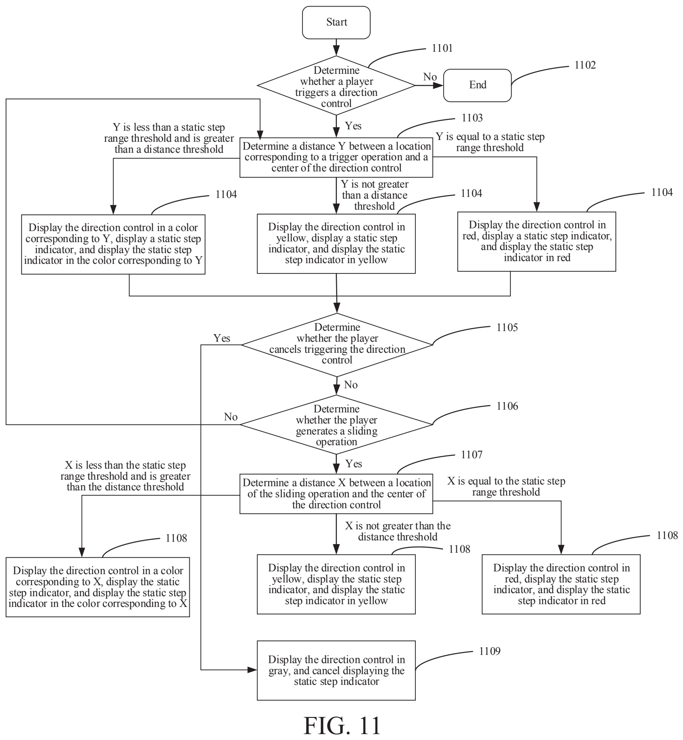

FIG. 11 is a flowchart of a control method according to an embodiment of the invention. The flowchart is a flowchart when a type of direction control is a fixed direction control. As shown in FIG. 11, the method includes operation 1101 to operation 1109.

Operation 1101: Determine whether a player triggers the direction control. When the player does not trigger the direction control, perform operation 1102; or when the player triggers the direction control, perform operation 1103.

Operation 1102: End a procedure.

Operation 1103: Determine a distance Y between a location corresponding to a trigger operation and a center of the direction control.

Operation 1104: When Y is equal to a static step range threshold, display the direction control in red, display a static step indicator, and display the static step indicator in red. When Y is not greater than a distance threshold, display the direction control in yellow, display a static step indicator, and display the static step indicator in yellow. When Y is less than a static step range threshold and is greater than a distance threshold, display the direction control in a color corresponding to Y, display a static step indicator, and display the static step indicator in the color corresponding to Y.

When Y is less than the static step range threshold and is greater than the distance threshold, the color corresponding to Y is a gradient color between yellow and red. When Y is greater than a static step range threshold, do not change the direction control, and do not display the static step indicator.

Operation 1105: Determine whether the player cancels triggering the direction control. When the player does not cancel triggering the direction control, perform operation 1106; or when the player cancels triggering the direction control, perform operation 1109.

Operation 1106: Determine whether the player generates a sliding operation. When the player generates the sliding operation, perform operation 1107; or when the player does not generate the sliding operation, perform operation 1103.

Operation 1107: Determine a distance X between a location of the sliding operation and the center of the direction control.

Operation 1108: When X is equal to the static step range threshold, display the direction control in red, display the static step indicator, and display the static step indicator in red. When X is not greater than the distance threshold, display the direction control in yellow, display the static step indicator, and display the static step indicator in yellow. When X is less than the static step range threshold and is greater than the distance threshold, display the direction control in a color corresponding to X, display the static step indicator, and display the static step indicator in the color corresponding to X.

When X is less than the static step range threshold and is greater than the distance threshold, the color corresponding to X is a gradient color between yellow and red. When X is greater than the static step range threshold, do not change the direction control, and do not display the static step indicator.

Operation 1109: Display the direction control in gray, and cancel displaying the static step indicator.

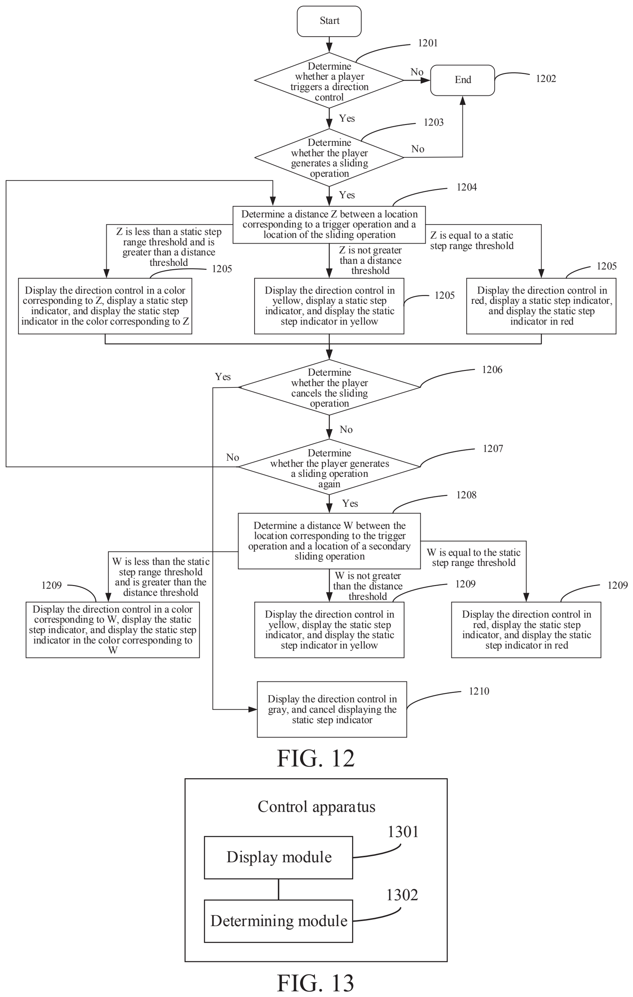

FIG. 12 is a flowchart of a control method according to an embodiment of the invention. The flowchart is a flowchart when a type of direction control is a follower direction control. As shown in FIG. 12, the method includes operation 1201 to operation 1210.

Operation 1201: Determine whether a player triggers the direction control. When the player does not trigger the direction control, perform operation 1202; or when the player triggers the direction control, perform operation 1203.

Operation 1202: End a procedure.

Operation 1203: Determine whether the player generates a sliding operation. When the player generates the sliding operation, perform operation 1204; or when the player does not generate the sliding operation, perform operation 1202.

Operation 1204: Determine a distance Z between a location corresponding to a trigger operation and a location of the sliding operation.

Operation 1205: When Z is equal to a static step range threshold, display the direction control in red, display a static step indicator, and display the static step indicator in red. When Z is not greater than a distance threshold, display the direction control in yellow, display a static step indicator, and display the static step indicator in yellow. When Z is less than a static step range threshold and is greater than a distance threshold, display the direction control in a color corresponding to Z, display a static step indicator, and display the static step indicator in the color corresponding to Z.

When Z is less than the static step range threshold and is greater than the distance threshold, the color corresponding to Z is a gradient color between yellow and red. When Z is greater than a static step range threshold, do not change the direction control, and do not display the static step indicator.

Operation 1206: Determine whether the player cancels the sliding operation. When the player does not cancel the sliding operation, perform operation 1207; or when the player cancels the sliding operation, perform operation 1210.

Operation 1207: Determine whether the player generates a sliding operation again.

Operation 1208: When the player generates the sliding operation again, determine a distance W between the location corresponding to the trigger operation and a location of a secondary sliding operation.

When the player does not generate the sliding operation again, perform operation 1204.

Operation 1209: When W is equal to the static step range threshold, display the direction control in red, display the static step indicator, and display the static step indicator in red. When W is not greater than the distance threshold, display the direction control in yellow, display the static step indicator, and display the static step indicator in yellow. When W is less than the static step range threshold and is greater than the distance threshold, display the direction control in a color corresponding to W, display the static step indicator, and display the static step indicator in the color corresponding to W.

When W is less than the static step range threshold and is greater than the distance threshold, the color corresponding to W is a gradient color between yellow and red. When W is greater than the static step range threshold, do not change the direction control, and do not display the static step indicator.

Operation 1210: Display the direction control in gray, and cancel displaying the static step indicator.

FIG. 13 is a schematic diagram of a structure of a control apparatus according to an embodiment of the invention. As shown in FIG. 13, the apparatus includes:

a display module 1301, configured to display a virtual environment picture in which a direction control is displayed, the direction control being configured to control movement of a virtual object in a virtual environment, the direction control being displayed in a first display mode, and the first display mode indicating that a moving mode of the virtual object in the virtual environment is a non-static step mode; and

the display module 1301 being configured to display the direction control in an adjusted display mode of the direction control in response to a target gesture operation for the direction control, an operation distance corresponding to the target gesture operation being not greater than a static step range threshold, and the adjusted display mode of the direction control indicating that the moving mode of the virtual object in the virtual environment is a static step mode.

In a possible implementation, the adjusted display mode of the direction control is determined based on the operation distance.

In a possible implementation, in a case that the operation distance is not greater than a distance threshold, the adjusted display mode of the direction control is a second display mode, the distance threshold is less than the static step range threshold, and the second display mode indicates that the moving mode of the virtual object in the virtual environment is a static step mode.

In a case that the operation distance is greater than a distance threshold and is less than the static step range threshold, the adjusted display mode of the direction control is a fourth display mode, and the fourth display mode is a display mode that transitions between the second display mode and a third display mode.

In a case that the operation distance is equal to the static step range threshold, the adjusted display mode of the direction control is the third display mode, and the third display mode indicates that the moving mode of the virtual object in the virtual environment is the static step mode but is about to change.

In a possible implementation, the apparatus further includes:

a determining module 1302, configured to: determine the second display mode as the adjusted display mode of the direction control when the operation distance is not greater than the distance threshold; determine the third display mode as the adjusted display mode of the direction control when the operation distance is equal to the static step range threshold; and determine the fourth display mode as the adjusted display mode of the direction control when the operation distance is greater than the distance threshold and is less than the static step range threshold, the fourth display mode corresponding to the operation distance; and if the operation distance is closer to the distance threshold, the fourth display mode being closer to the second display mode; or if the operation distance is closer to the static step range threshold, the fourth display mode being closer to the third display mode.

In a possible implementation, the second display mode is a first color, the third display mode is a second color, and the fourth display mode is a gradient color between the first color and the second color. In a case that the operation distance is greater than the distance threshold and is less than the static step range threshold, if the operation distance is closer to the distance threshold, a color corresponding to the operation distance is closer to the first color; or if the operation distance is closer to the static step range threshold, the color corresponding to the operation distance is closer to the second color.

The second display mode is a first shape, the third display mode is a second shape, and the fourth display mode is a gradient shape between the first shape and the second shape; and in a case that the operation distance is greater than the distance threshold and is less than the static step range threshold, if the operation distance is closer to the distance threshold, a shape corresponding to the operation distance is closer to the first shape; or if the operation distance is closer to the static step range threshold, a shape corresponding to the operation distance is closer to the second shape.

Alternatively, the second display mode is displaying a first pattern in an area in which the direction control is located, the third display mode is displaying a second pattern in the area in which the direction control is located, and the fourth display mode is displaying a gradient pattern between the first pattern and the second pattern in the area in which the direction control is located; and in a case that the operation distance is greater than the distance threshold and is less than the static step range threshold, if the operation distance is closer to the distance threshold, a pattern corresponding to the operation distance is closer to the first pattern; or if the operation distance is closer to the static step range threshold, a pattern corresponding to the operation distance is closer to the second pattern.

In a possible implementation, the display module 1301 is further configured to display a static step indicator in a virtual environment picture in response to the target gesture operation for the direction control. The static step indicator indicates that the moving mode of the virtual object in the virtual environment is the static step mode. An operation distance corresponding to the target gesture operation is not greater than the static step range threshold.

In a possible implementation, the static step indicator is displayed in the same display mode as the adjusted display mode of the direction control.

In a possible implementation, the apparatus further includes:

the determining module 1302, configured to determine a display location of the static step indicator based on the target gesture operation for the direction control when the operation distance is not greater than the static step range threshold; and

the display module 1301 being configured to display the static step indicator at the display location of the static step indicator in the virtual environment picture.

In a possible implementation, the determining module 1302 is configured to determine, when a type of the direction control is a fixed direction control, and the target gesture operation is a trigger operation, a first ray that uses a center of the direction control as a starting point and passes through a location corresponding to the trigger operation; and determine a first point on the first ray as the display location of the static step indicator, a distance between the first point and a second point meeting a distance requirement, the first point being positioned at a different location than the direction control, and the second point being an intersection point of the first ray and the direction control.

In a possible implementation, the determining module 1302 is configured to determine, when a type of the direction control is a follower direction control, and the target gesture operation is a continuous gesture operation with sliding after triggering, a second ray that uses the location corresponding to the trigger operation as a starting point and passes through a location of a sliding operation; determine a third ray that is parallel to the second ray and uses the center of the direction control as a starting point; and determine a third point on the third ray as the display location of the static step indicator, a distance between the third point and a fourth point meeting a distance requirement, the third point being positioned at a different location than the direction control, and the fourth point being an intersection point of the third ray and the direction control.

In a possible implementation, the type of the direction control is the fixed direction control, and the target gesture operation is the trigger operation.

The determining module 1302 is configured to: determine a distance between the location corresponding to the trigger operation and the center of the direction control in response to the trigger operation for the direction control; and determine the distance between the location corresponding to the trigger operation and the center of the direction control as the operation distance.

In a possible implementation, the type of the direction control is the follower direction control, and the target gesture operation is the continuous gesture operation with sliding after triggering.

The determining module 1302 is configured to determine: determine a distance between the location corresponding to the trigger operation and the location of the sliding operation in response to the continuous gesture operation that is with sliding after triggering and that is for a direction control; and determine the distance between the location corresponding to the trigger operation and the location of the sliding operation as the operation distance.

In a possible implementation, the type of the direction control is the fixed direction control, and the target gesture operation is the trigger operation.

The determining module 1302 is further configured to determine, in response to receiving, after the trigger operation, a sliding operation for the direction control, a distance between the location of the sliding operation and the center of the direction control.

The display module 1301 is further configured to adjust the display mode of the direction control to the first display mode when the distance between the location of the sliding operation and the center of the direction control is greater than the static step range threshold.

In a possible implementation, the type of the direction control is the follower direction control, and the target gesture operation is the continuous gesture operation with sliding after triggering.

The determining module 1302 is further configured to determine, in response to receiving, after the sliding operation, a secondary sliding operation for the direction control, a distance between a location of the secondary sliding operation and the location corresponding to the trigger operation.

The display module 1301 is further configured to adjust the display mode of the direction control to the first display mode when the distance between the location of the secondary sliding operation and the location corresponding to the trigger operation is greater than the static step range threshold.

In the foregoing apparatus, in a case that the direction control is triggered, and the operation distance corresponding to the target gesture operation of the direction control is not greater than the static step range threshold, the adjusted display mode of the direction control is determined, and the direction control is displayed in the adjusted display mode of the direction control, so that a user can learn, based on the adjusted display mode of the direction control, whether the moving mode of the virtual object in the virtual environment is the static step mode, without shaking the virtual environment, so that accuracy of the moving mode that is of the virtual object and that is determined by the user in the virtual environment is high. The user may control the virtual object based on the moving mode of the virtual object in the virtual environment, so that an effect of controlling the virtual object is good.

When the apparatus provided above implements functions of the apparatus, only division into the foregoing function modules is used as an example for description. In the practical application, the functions may be allocated to and completed by different function modules based on requirements. In other words, an internal structure of a device is divided into different function modules, to complete all or a part of the functions described above. In addition, the apparatus and method embodiments provided in the foregoing embodiments belong to the same conception. For the specific implementation process, refer to the method embodiments. Details are not described herein again.

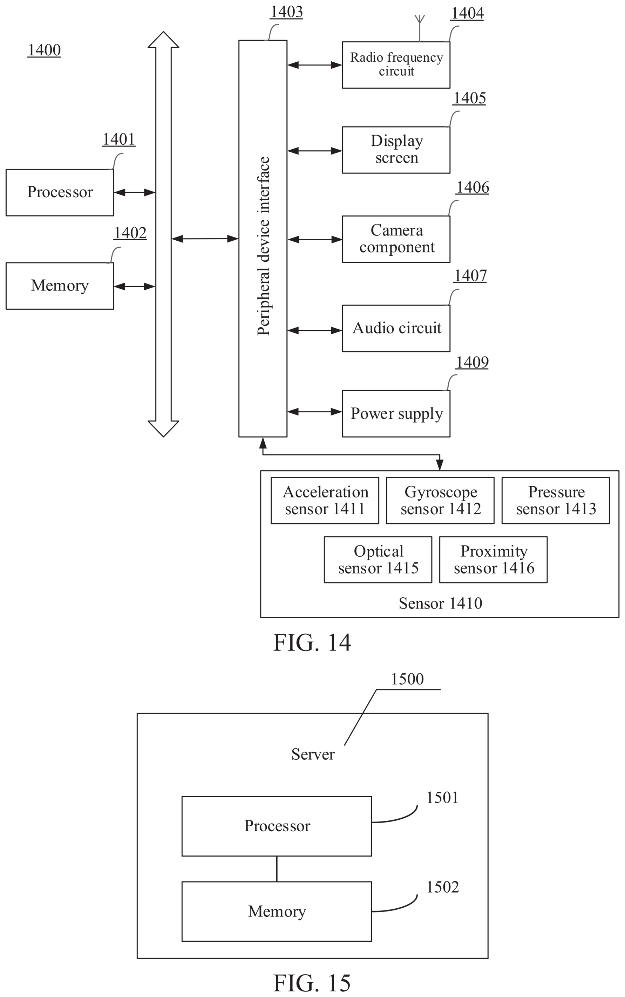

FIG. 14 shows a block diagram of a structure of a terminal device 1400 according to an exemplary embodiment of the invention. The terminal device 1400 may be any electronic device product that may perform human-machine interaction with a user in one or more manners such as a keyboard, a touch pad, a remote control, voice interaction, or a handwriting device, for example, a personal computer (PC), a mobile phone, a smartphone, a personal digital assistant (PDA), a wearable device, a pocket PC (PPC), a tablet computer, a smart on board unit, a smart television, a smart speaker, a smart watch. Generally, the terminal device 1400 includes a processor 1401 and a memory 1402.

The processor 1401 may include one or more processing cores, for example, a 4-core processor and an 8-core processor. The processor 1401 may be implemented in at least one hardware form of a digital signal processor (DSP), a field-programmable gate array (FPGA), and a programmable logic array (PLA). In some embodiments, the processor 1401 may further include an artificial intelligence (AI) processor. The AI processor is configured to process computing operations related to machine learning.

The memory 1402 may include one or more computer-readable storage media. The computer-readable storage medium may be non-transitory. In some embodiments, the non-transitory computer-readable storage medium in the memory 1402 is configured to store at least one instruction, and the at least one instruction is configured to be executed by the processor 1401 to implement the control method provided in method embodiments of the invention.

In some embodiments, the terminal device 1400 may further include: a peripheral device interface 1403 and at least one peripheral device. The processor 1401, the memory 1402, and the peripheral device interface 1403 may be connected through a bus or a signal cable. Each peripheral device may be connected to the peripheral device interface 1403 through a bus, a signal cable, or a circuit board. Specifically, the peripheral device includes at least one of a radio frequency circuit 1404, a display screen 1405, a camera component 1406, an audio circuit 1407, and a power supply 1409.

The peripheral device interface 1403 may be configured to connect, to the processor 1401 and the memory 1402, the at least one peripheral device related to input/output (I/O). In some embodiments, the processor 1401, the memory 1402, and the peripheral device interface 1403 are integrated on the same chip or circuit board. In some other embodiments, any one or two of the processor 1401, the memory 1402, and the peripheral device interface 1403 may be implemented on a single chip or circuit board. The embodiment of the invention is not limited thereto.

The radio frequency circuit 1404 is configured to receive and transmit a radio frequency (RF) signal, which is also referred to as an electromagnetic signal. The radio frequency circuit 1404 communicates with a communication network and another communication device through the electromagnetic signal. The radio frequency circuit 1404 converts an electric signal into an electromagnetic signal for transmission, or converts a received electromagnetic signal into an electric signal.

The display screen 1405 is configured to display a user interface (UI). The UI may include a graph, text, an icon, a video, and any combination thereof. When the display screen 1405 is a touch display screen, the display screen 1405 further has a capability of obtaining a touch signal on or above a surface of the display screen 1405. The touch signal may be inputted to the processor 1401 as a control signal for processing. In this case, the display screen 1405 may be further configured to provide a virtual button and/or a virtual keyboard, which is also referred to as a soft button and/or a soft keyboard.

The camera component 1406 is configured to obtain images or videos. In some embodiments, the camera component 1406 includes a front-facing camera and a rear-facing camera. In some embodiments, there are at least two rear-facing cameras, which are respectively any of a main camera, a depth-of-field camera, a wide-angle camera, and a telephoto camera, to achieve a function of background blur function through fusion of the main camera and the depth-of-field camera, a function of panoramic photographing and virtual reality (VR) photographing through fusion of the main camera and the wide-angle camera, or other fusion photographing functions.

The audio circuit 1407 may include a microphone and a speaker. The microphone is configured to obtain sound waves of a user and an environment, and convert the sound waves into an electrical signal to be inputted to the processor 1401 for processing, or be inputted to the radio frequency circuit 1404 for implementing voice communication. The speaker may be a conventional film speaker, or may be a piezoelectric ceramic speaker. In some embodiments, the audio circuit 1407 may further include an earphone jack.

The power supply 1409 is configured to supply power to components in the terminal device 1400. The power supply 1409 may be an alternating current, a direct current, a primary battery, or a rechargeable battery. When the power supply 1409 includes the rechargeable battery, and the rechargeable battery may be a wired rechargeable battery or a wireless rechargeable battery.

In some embodiments, the terminal device 1400 further includes one or more sensors 1410. The one or more sensors 1410 include but are not limited to an acceleration sensor 1411, a gyroscope sensor 1412, a pressure sensor 1413, an optical sensor 1415, and a proximity sensor 1416.

A person skilled in the art may understand that the structure shown in FIG. 14 constitutes no limitation on the terminal device 1400, and the terminal device 1400 may include more or fewer components than those shown in the figure, some components may be combined, or a different component deployment may be used.

FIG. 15 is a schematic diagram of a structure of a server according to an embodiment of the invention. The server 1500 may vary a lot due to different configurations or performance, and may include one or more processors (Central Processing Units, CPUs) 1501 and one or more memories 1502. The one or more memories 1502 store at least one piece of program code, and the at least one piece of program code is loaded and executed by the one or more processors 1501 to implement the control method provided in the foregoing method embodiments. Certainly, the server 1500 may further have components such as a wired or wireless network interface, a keyboard, and an input/output interface, to help perform input and output. The server 1500 may further include another component configured to implement a device function. Details are not described herein.

In an exemplary embodiment, a computer-readable storage medium is further provided, the computer-readable storage medium stores at least one piece of program code, and the at least one piece of program code is loaded and executed by a processor, to cause a computer to implement any one of the foregoing control methods.

In some embodiments, the computer-readable storage medium may be a read-only memory (ROM), a random access memory (RAM), a compact disc read-only memory (CD-ROM), a magnetic tape, a floppy disk, an optical data storage device, or the like.

In an exemplary embodiment, a computer program or a computer program product is further provided. The computer program or the computer program product stores at least one computer instruction, the at least one computer instruction being loaded and executed by a processor, to cause a computer to implement any one of the foregoing control methods.

Information (including but not limited to user equipment information, user personal information, and the like), data (including but not limited to data for analysis, data for storage, data for display, and the like), and signals mentioned in the invention are all authorized by users or fully authorized by all parties, and collection, use, and processing of relevant data need to comply with relevant laws, regulations, and standards of relevant countries and regions. For example, the game picture mentioned in the invention is obtained under full authorization.

"Plurality of" mentioned in the specification means two or more. "And/or" describes an association relationship for describing associated objects and indicates that three relationships may exist. For example, A and/or B may indicate the following three cases: Only A exists, both A and B exist, and only B exists. The character "/" generally indicates an "or" relationship between the associated objects.

The foregoing descriptions are merely exemplary embodiments of the invention, and are not intended to limit the invention. Any modification, equivalent replacement, or improvement made within the principle of the invention shall fall within the protection scope of the invention.

## Claims

1. A control method, comprising:

   displaying, by a terminal device, a virtual environment picture in which a direction control is displayed, the direction control being configured to control movement of a virtual object in a virtual environment, the direction control being displayed in a first display mode, and the first display mode indicating that a moving mode of the virtual object in the virtual environment is a non-static step mode; and
   displaying, by the terminal device, the direction control in an adjusted display mode of the direction control in response to a target gesture operation for the direction control, an operation distance corresponding to the target gesture operation being not greater than a static step range threshold, and the adjusted display mode of the direction control indicating that the moving mode of the virtual object in the virtual environment is a static step mode.

2. The method according to claim 1, wherein the adjusted display mode of the direction control is determined based on the operation distance.

3. The method according to claim 2, wherein

when the operation distance is not greater than a distance threshold, the adjusted display mode of the direction control is a second display mode, the distance threshold is less than the static step range threshold, and the second display mode indicates that the moving mode of the virtual object in the virtual environment is the static step mode;
when the operation distance is greater than the distance threshold and less than the static step range threshold, the adjusted display mode of the direction control is a fourth display mode, and the fourth display mode is a display mode that transitions between the second display mode and a third display mode; or
when the operation distance is equal to the static step range threshold, the adjusted display mode of the direction control is the third display mode, and the third display mode indicates that the moving mode of the virtual object in the virtual environment is the static step mode but is about to change.

4. The method according to claim 3, further comprising:

determining, by the terminal device, the second display mode as the adjusted display mode of the direction control when the operation distance is not greater than the distance threshold;
determining, by the terminal device, the third display mode as the adjusted display mode of the direction control when the operation distance is equal to the static step range threshold; and
determining, by the terminal device, the fourth display mode as the adjusted display mode of the direction control when the operation distance is greater than the distance threshold and less than the static step range threshold, the fourth display mode corresponding to the operation distance, and if the operation distance is closer to the distance threshold, the fourth display mode is closer to the second display mode; or if the operation distance is closer to the static step range threshold, the fourth display mode is closer to the third display mode.

5. The method according to claim 3 or 4, wherein

the second display mode is a first color, the third display mode is a second color, and the fourth display mode is a gradient color between the first color and the second color; and when the operation distance is greater than the distance threshold and less than the static step range threshold, if the operation distance is closer to the distance threshold, a color corresponding to the operation distance is closer to the first color; or if the operation distance is closer to the static step range threshold, a color corresponding to the operation distance is closer to the second color; or
the second display mode is a first shape, the third display mode is a second shape, and the fourth display mode is a gradient shape between the first shape and the second shape; and when the operation distance is greater than the distance threshold and less than the static step range threshold, if the operation distance is closer to the distance threshold, a shape corresponding to the operation distance is closer to the first shape; or if the operation distance is closer to the static step range threshold, a shape corresponding to the operation distance is closer to the second shape; or
the second display mode is displaying a first pattern in an area in which the direction control is located, the third display mode is displaying a second pattern in the area in which the direction control is located, and the fourth display mode is displaying a gradient pattern between the first pattern and the second pattern in the area in which the direction control is located; and when the operation distance is greater than the distance threshold and less than the static step range threshold, if the operation distance is closer to the distance threshold, a pattern corresponding to the operation distance is closer to the first pattern; or if the operation distance is closer to the static step range threshold, a pattern corresponding to the operation distance is closer to the second pattern.

6. The method according to any one of claims 1 to 5, further comprising:
displaying, by the terminal device, a static step indicator in the virtual environment picture in response to the target gesture operation for the direction control, the static step indicator indicating that the moving mode of the virtual object in the virtual environment is the static step mode.

7. The method according to claim 6, wherein the static step indicator is displayed in the same display mode as the adjusted display mode of the direction control.

8. The method according to claim 6 or 7, further comprising:

determining, by the terminal device, a display location of the static step indicator based on the target gesture operation for the direction control when the operation distance is not greater than the static step range threshold; and
displaying the static step indicator in the virtual environment picture comprises:
displaying the static step indicator at the display location of the static step indicator in the virtual environment picture.

9. The method according to claim 8, wherein determining the display location of the static step indicator based on the target gesture operation for the direction control comprises:

when the direction control is a fixed direction control and the target gesture operation is a trigger operation, determining a first ray that uses a center of the direction control as a starting point and passes through a location corresponding to the trigger operation; and
determining a first point on the first ray as the display location of the static step indicator, a distance between the first point and a second point meeting a distance requirement, the first point being positioned at a different location than the direction control, and the second point being an intersection point of the first ray and the direction control.

10. The method according to claim 8, wherein determining the display location of the static step indicator based on the target gesture operation for the direction control comprises:

when the direction control is a follower direction control and the target gesture operation is a continuous gesture operation with sliding after triggering, determining a second ray that uses a location corresponding to a trigger operation as a starting point and passes through a location of a sliding operation;
determining a third ray that is parallel to the second ray and uses a center of the direction control as a starting point; and
determining a third point on the third ray as the display location of the static step indicator, a distance between the third point and a fourth point meeting a distance requirement, the third point being positioned at a different location than the direction control, and the fourth point being an intersection point of the third ray and the direction control.

11. The method according to any one of claims 1 to 9, wherein the direction control is a fixed direction control, and the target gesture operation is a trigger operation; and
the method further comprises:

determining, by the terminal device, a distance between a location corresponding to the trigger operation and a center of the direction control in response to the trigger operation for the direction control; and
determining, by the terminal device, the distance between the location corresponding to the trigger operation and the center of the direction control as the operation distance.

12. The method according to any one of claims 1 to 8 and 10, wherein the direction control is a follower direction control, and the target gesture operation is a continuous gesture operation with sliding after triggering; and
the method further comprises:

determining, by the terminal device, a distance between a location corresponding to a trigger operation and a location of a sliding operation in response to the continuous gesture operation that is with sliding after triggering and that is for the direction control; and
determining, by the terminal device, the distance between the location corresponding to the trigger operation and the location of the sliding operation as the operation distance.

13. The method according to any one of claims 1 to 9, wherein the direction control is a fixed direction control, and the target gesture operation is a trigger operation; and
after displaying, by the terminal device, the direction control in the adjusted display mode of the direction control in response to the target gesture operation for the direction control, the method further comprises:

in response to receiving, after the trigger operation, a sliding operation for the direction control, determining, by the terminal device, a distance between a location of the sliding operation and a center of the direction control; and
displaying, by the terminal device, the direction control in the first display mode when the distance between the location of the sliding operation and the center of the direction control is greater than the static step range threshold.

14. The method according to any one of claims 1 to 8 and 10, wherein the direction control is a follower direction control, and the target gesture operation is a continuous gesture operation with sliding after triggering; and
after displaying, by the terminal device, the direction control in the adjusted display mode of the direction control in response to the target gesture operation for the direction control, the method further comprises:

in response to receiving, after a sliding operation, a secondary sliding operation for the direction control, determining, by the terminal device, a distance between a location of the secondary sliding operation and a location corresponding to a trigger operation; and

displaying, by the terminal device, the direction control in the first display mode when the distance between the location of the secondary sliding operation and the location corresponding to the trigger operation is greater than the static step range threshold.

15. A control apparatus, comprising:

a display module, configured to display a virtual environment picture in which a direction control is displayed, the direction control being configured to control movement of a virtual object in a virtual environment, the direction control being displayed in a first display mode, and the first display mode indicating that a moving mode of the virtual object in the virtual environment is a non-static step mode; and

the display module being further configured to display the direction control in an adjusted display mode of the direction control in response to a target gesture operation for the direction control, an operation distance corresponding to the target gesture operation being not greater than a static step range threshold, and the adjusted display mode of the direction control indicating that the moving mode of the virtual object in the virtual environment is a static step mode.

16. A terminal device, the terminal device comprising a processor and a memory, the memory storing at least one piece of program code, and the at least one piece of program code being loaded and executed by the processor, to cause the terminal device to implement the control method according to any one of claims 1 to 14.

17. A computer-readable storage medium, the computer-readable storage medium storing at least one piece of program code, the at least one piece of program code being loaded and executed by a processor, to cause a computer to implement the control method according to any one of claims 1 to 14.

18. A computer program product, the computer program product storing at least one computer instruction, the at least one computer instruction being loaded and executed by a processor, to cause a computer to implement the control method according to any one of claims 1 to 14.

FIG. 1

| |
|---|
| Display a virtual environment picture including a direction control, the direction control being configured to control movement of a virtual object in a virtual environment, the direction control being displayed in a first display mode, and the first display mode indicating that a moving mode of the virtual object in the virtual environment is a non-static step mode |

201

| |
|---|
| Display the direction control in an adjusted display mode of the direction control in response to a target gesture operation for the direction control, an operation distance corresponding to the target gesture operation being not greater than a static step range threshold, and the adjusted display mode of the direction control indicating that the moving mode of the virtual object in the virtual environment is a static step mode |

202

FIG. 2

FIG. 3

EP 4 744 747 A1

FIG. 4

FIG. 5

FIG. 6

23

FIG. 7

FIG. 8

Mini map

902

901

903

904

FIG. 9

Mini map

1003

1002

1001

1004

FIG. 10

Start

Determine whether a player triggers a direction control — 1101

No → End — 1102

Yes

Determine a distance Y between a location corresponding to a trigger operation and a center of the direction control — 1103

Y is less than a static step range threshold and is greater than a distance threshold

Y is equal to a static step range threshold

Y is not greater than a distance threshold

Display the direction control in a color corresponding to Y, display a static step indicator, and display the static step indicator in the color corresponding to Y — 1104

Display the direction control in yellow, display a static step indicator, and display the static step indicator in yellow — 1104

Display the direction control in red, display a static step indicator, and display the static step indicator in red — 1104

Determine whether the player cancels triggering the direction control — 1105

Yes

No

Determine whether the player generates a sliding operation — 1106

No

Yes

Determine a distance X between a location of the sliding operation and the center of the direction control — 1107

X is less than the static step range threshold and is greater than the distance threshold

X is equal to the static step range threshold

X is not greater than the distance threshold

Display the direction control in a color corresponding to X, display the static step indicator, and display the static step indicator in the color corresponding to X — 1108

Display the direction control in yellow, display the static step indicator, and display the static step indicator in yellow — 1108

Display the direction control in red, display the static step indicator, and display the static step indicator in red — 1108

Display the direction control in gray, and cancel displaying the static step indicator — 1109

FIG. 11

Start

1201

Determine whether a player triggers a direction control → No → End 1202

Yes

1203

Determine whether the player generates a sliding operation → No → End

Yes

1204

Determine a distance Z between a location corresponding to a trigger operation and a location of the sliding operation

Z is less than a static step range threshold and is greater than a distance threshold

Z is not greater than a distance threshold

Z is equal to a static step range threshold

1205 — Display the direction control in a color corresponding to Z, display a static step indicator, and display the static step indicator in the color corresponding to Z

1205 — Display the direction control in yellow, display a static step indicator, and display the static step indicator in yellow

1205 — Display the direction control in red, display a static step indicator, and display the static step indicator in red

1206

Yes ← Determine whether the player cancels the sliding operation

No

1207

No ← Determine whether the player generates a sliding operation again

Yes

1208

Determine a distance W between the location corresponding to the trigger operation and a location of a secondary sliding operation

W is less than the static step range threshold and is greater than the distance threshold

W is not greater than the distance threshold

W is equal to the static step range threshold

1209 — Display the direction control in a color corresponding to W, display the static step indicator, and display the static step indicator in the color corresponding to W

1209 — Display the direction control in yellow, display the static step indicator, and display the static step indicator in yellow

1209 — Display the direction control in red, display the static step indicator, and display the static step indicator in red

1210 — Display the direction control in gray, and cancel displaying the static step indicator

## FIG. 12

Control apparatus

Display module — 1301

Determining module — 1302

## FIG. 13

1400

1403

1401

1404

Processor

1402

Radio frequency
circuit

Memory

Peripheral device interface

1405

Display
screen

1406

Camera
component

1407

Audio circuit

1409

Power supply

| Acceleration sensor 1411 | Gyroscope sensor 1412 | Pressure sensor 1413 |
|---|---|---|
| | Optical sensor 1415 | Proximity sensor 1416 |

Sensor 1410

FIG. 14

1500

Server

1501

Processor

1502

Memory

FIG. 15

## INTERNATIONAL SEARCH REPORT

| International application No. |
|---|
| **PCT/CN2024/102956** |

**A. CLASSIFICATION OF SUBJECT MATTER**

A63F13/57(2014.01)i

According to International Patent Classification (IPC) or to both national classification and IPC

**B. FIELDS SEARCHED**

Minimum documentation searched (classification system followed by classification symbols)

IPC: A63F13

Documentation searched other than minimum documentation to the extent that such documents are included in the fields searched

Electronic data base consulted during the international search (name of data base and, where practicable, search terms used)

CNABS, CNTXT, WPABS, WPABSC, ENTXT, ENTXTC, USTXT, DWPI, VEN, OETXT, HIMMPAT, 读秀, DUXIU, CNKI, 必应, BING: 腾讯, 王佳妮, 杜丹丹, 方向, 静步, 距离, direction, quiet, move, distance

**C. DOCUMENTS CONSIDERED TO BE RELEVANT**

| Category* | Citation of document, with indication, where appropriate, of the relevant passages | Relevant to claim No. |
|---|---|---|
| A | CN 113648656 A (NETEASE (HANGZHOU) NETWORK CO., LTD.) 16 November 2021 (2021-11-16)<br>description, paragraphs 0055 to 0134, and figures 1-13 | 1-18 |
| A | CN 114191820 A (TENCENT TECHNOLOGY (SHENZHEN) CO., LTD.) 18 March 2022 (2022-03-18)<br>entire document | 1-18 |
| A | US 2023285859 A1 (TENCENT TECHNOLOGY (SHENZHEN) CO., LTD.) 14 September 2023 (2023-09-14)<br>entire document | 1-18 |
| A | WO 2022213521 A1 (NETEASE (HANGZHOU) NETWORK CO., LTD.) 13 October 2022 (2022-10-13)<br>entire document | 1-18 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **28 August 2024** | **20 September 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
**Information on patent family members**

International application No.

**PCT/CN2024/102956**

| Patent document cited in search report | | | Publication date (day/month/year) | Patent family member(s) | | | Publication date (day/month/year) |
|---|---|---|---|---|---|---|---|
| CN | 113648656 | A | 16 November 2021 | CN | 113648656 | B | 09 August 2024 |
| CN | 114191820 | A | 18 March 2022 | CN | 114191820 | B | 16 June 2023 |
| US | 2023285859 | A1 | 14 September 2023 | WO | 2023011063 | A1 | 09 February 2023 |
| | | | | JP | 2024523984 | A | 05 July 2024 |
| | | | | CN | 115703011 | A | 17 February 2023 |
| | | | | HK | 40080523 | A0 | 05 May 2023 |
| WO | 2022213521 | A1 | 13 October 2022 | JP | 2023542148 | A | 05 October 2023 |
| | | | | JP | 7498362 | B2 | 11 June 2024 |
| | | | | CN | 113181651 | A | 30 July 2021 |
| | | | | CN | 113181651 | B | 19 January 2024 |

Form PCT/ISA/210 (patent family annex) (July 2022)

**EP 4 744 747 A1**

**Patent documents cited in the description**

- CN 202311608837X